# EUROPÄISCHE PATENTSCHRIFT

(11) **EP 2 657 653 B1**
(45) Veröffentlichungstag und Bekanntmachung des Hinweises auf die Patenterteilung: **18.05.2016**
(21) Anmeldenummer: 12166059.1
(22) Anmeldetag: 27.04.2012
(51) Int. Cl.: G01D 5/34, G01D 5/347

(54) **Vorrichtung zur Messung des Drehwinkels zweier relativ zueinander um eine Drehachse rotierender Objekte**
Device for measuring the relative angle of two objects which can be rotated relative to each other around a rotation axis
Dispositif de mesure de l'angle de rotation de deux objets tournant l'un par rapport à l'autre autour d'un axe

(43) Veröffentlichungstag der Anmeldung: 30.10.2013
(73) Patentinhaber: SICK STEGMANN GmbH, 78166 Donaueschingen (DE)
(72) Erfinder: Hopp, David, 78166 Donaueschingen (DE)
(74) Vertreter: Westphal, Mussgnug & Partner Patentanwälte mbB

(56) Entgegenhaltungen:
- DE-U1- 20 102 192
- FR-A1- 2 916 042
- GB-A- 1 498 409
- JP-A- 6 018 287
- US-A1- 2005 211 886

## Beschreibung

Die Erfindung betrifft eine Vorrichtung zur Messung des Drehwinkels zweier relativ zueinander um eine Drehachse rotierender Objekte gemäß dem Oberbegriff des Patentanspruchs 1.

Die Erfassung des Drehwinkels zweier relativ zueinander um eine Drehachse rotierender Objekte, bspw. einer sich drehenden Motorwelle relativ zu einem feststehenden Element, kann mit Hilfe eines berührungslosen optischen Sensors basierend auf den Polarisationseigenschaften des Lichts geschehen. Beispiele für derartige Vorrichtungen zeigen die DE 201 02 192 U1, EP 2 187 178 A1, EP 1 507 137 A1 oder US 7,777,879.

Bekannte Vorrichtungen zur Messung des Drehwinkels zweier relativ zueinander um eine Drehachse rotierender Objekte weisen eine dem einen Objekt zugeordnete Lichtquelle, einen dem anderen Objekt zugeordneten Polarisator, wobei sich die Lichtquelle und der Polarisator in Abhängigkeit vom Drehwinkel relativ zueinander drehen, und einen Empfänger auf, der die durch den Polarisator durchtretende oder reflektierte Lichtintensität misst, um ein drehwinkelabhängiges Signal zu erzeugen, wobei der Empfänger wenigstens ein erstes Empfangselement aufweist und wobei entweder das von der Lichtquelle ausgesandte Licht polarisiert ist oder polarisiert wird und/oder wobei vor dem ersten Empfangselement ein Polarisationsfilter mit einer ersten Polarisationsrichtung angeordnet ist. Die relative Drehung zwischen einem linear polarisierten Lichtstrahl und einem Linearpolarisator führt zu einer Lichtintensitätsmodulation, die mit dem Empfänger detektierbar ist und aus welcher die relative Winkelstellung ermittelt werden kann. Ist der Polarisator an einem sich drehenden Objekt, bspw. einer Motorwelle, angeordnet, lässt sich der Drehwinkel des sich drehenden Objektes bestimmen. Aufgrund der physikalischen Eigenschaften der Polarisation weisen die drehwinkelabhängigen Signale zwei Perioden pro Umdrehung um 360° auf, sodass sich ein Inkrementalsignal, nicht jedoch ein Absolutsignal ergibt.

Aus der US 2005/211886 A1 und der GB 1 498 409 A sind jeweils Vorrichtungen zur Messung des Drehwinkels zweier relativ zueinander um eine Drehachse rotierender Objekte bekannt, die eine Lichtquelle und einen Polarisator, die sich in Abhängigkeit vom Drehwinkel zueinander drehen, und mit einem Empfänger, der durch den Polarisator durchtretende Lichtintensität misst, um ein drehwinkelabhängiges Signal zu erzeugen, bekannt. Dabei weist der Empfänger jeweils wenigstens ein erstes Empfangselement auf, vor dem ein Polarisationsfilter mit einer ersten Polarisationsrichtung angeordnet ist, während vor dem Empfänger ein Schatten werfendes Element angeordnet ist. Dabei weist der Empfänger wenigstens eine Quadrantendiode auf und es sind Mittel zur Variation der Form des Schattens auf dem Empfänger über eine Drehung um 360° vorgesehen.

Die Aufgabe der Erfindung besteht daher darin, eine Eindeutigkeit über eine volle Umdrehung um 360° des rotierenden Objektes und somit ein absolutes Winkelsignal zu ermöglichen, wobei vorzugsweise möglichst wenig Einbußen bei der Signalqualität verursacht werden.

Die Aufgabe der Erfindung wird gelöst durch eine Vorrichtung zur Messung des Drehwinkels zweier relativ zueinander um eine Drehachse rotierender Objekte mit den Merkmalen des Patentanspruchs 1 sowie ein Verfahren zur Messung des Drehwinkels zweier relativ zueinander um eine Drehachse rotierender Objekte mit dem Merkmal des Patentanspruchs 16.

Vorteilhafte Ausgestaltungen und Weiterbildungen der Erfindung sind in den abhängigen Ansprüchen angegeben.

Die erfindungsgemäße Vorrichtung zur Messung des Drehwinkels zweier relativ zueinander um eine Drehachse rotierender Objekte, mit einer Lichtquelle, mit einem Polarisator, wobei sich die Lichtquelle und der Polarisator in Abhängigkeit vom Drehwinkel relativ zueinander drehen, und mit einem Empfänger, der die durch den Polarisator reflektierte Lichtintensität misst, um ein drehwinkelabhängiges Signal zu erzeugen, wobei der Empfänger wenigstens ein erstes Empfangselement aufweist, und wobei entweder das von der Lichtquelle ausgesandte Licht polarisiert ist oder polarisiert wird und/oder wobei vor dem ersten Empfangselement ein Polarisationsfilter mit einer ersten Polarisationsrichtung angeordnet ist, zeichnet sich dadurch aus, dass vor dem Empfänger wenigstens ein schattenwerfendes Element angeordnet ist, dass der Empfänger wenigstens eine Quadrantendiode aufweist und dass Mittel zur Variation der Position und/oder der Form des Schattens auf dem Empfänger über eine Drehung um 360° vorgesehen sind.. Die Mittel zur Variation der Position und/oder der Form des Schattens, der durch das schattenwerfende Element erzeugt wird, auf dem Empfänger über eine Drehung um 360° verursachen somit eine Brechung der Symmetrie, die gezielt zur Generierung einer eindeutigen Winkelinformation über 360° genutzt werden kann. Durch die Verwendung einer Quadrantendiode können die variierenden Intensitäten auf den Quadranten, welche durch die variierende Position des Schattens und/oder eine variierende Form des Schattens verursacht werden, ausgelesen und direkt in ein Absolutsignal umgewandelt werden. Unter einer Quadrantendiode ist dabei vorliegend eine Anordnung von mehreren fotoempfindlichen Flächen mit beliebigen Formen oder Positionen in der Empfängerebene zu verstehen, welche wenigstens zwei, besonders bevorzugt wenigstens drei oder vier fotoempfindliche Flächen, im Folgenden auch als Quadranten bezeichnet, aufweist, wobei die Flächen der einzelnen Quadranten vorzugsweise gleich groß sind und vorzugsweise die Quadranten identische Formen aufweisen und vorzugsweise die Quadranten symmetrisch in der Empfängerebene positioniert angeordnet sind. Wesentlich für die Anordnung der Quadrantendiode in der Empfängerebene ist, dass alle Quadranten der Quadrantendiode bei jeder Relativposition der beiden zueinander um eine Drehachse rotierenden Objekte zumindest teilweise beleuchtet und zumindest teilweise abgeschattet werden.

Gemäß einer bevorzugten Ausgestaltungsform der Erfindung sind die Mittel zur Variation der Position und/oder der Form des Schattens dadurch realisiert, dass der Polarisator einen polarisierenden Bereich und einen nicht polarisierenden Bereich aufweist, wobei der nicht polarisierende Bereich exzentrisch zur Drehachse angeordnet ist. Durch die Segmentierung des Polarisators in einen polarisierenden Bereich und einen exzentrisch zur Drehachse angeordneten nicht polarisierenden Bereich wird eine sinusförmige Intensitätsmodulation hervorgerufen, welche bei einer Umdrehung um 360° genau eine Periode aufweist, sodass die beiden bei einer Drehung um 360° auftretenden Intensitätsmaxima der Lichtintensität unterschiedlich beeinflusst werden und eine eindeutige Bestimmung der Winkelposition auf 360° möglich ist.

Gemäß der Erfindung sind die Mittel zur Variation der Position und/oder der Form des Schattens dadurch realisiert, dass der Polarisator als Scheibe mit einer Normalen ausgebildet ist, wobei die Normale der Scheibe in einem von 0° verschiedenen Winkel zu der Drehachse angeordnet ist. Dadurch, dass der Polarisator mit seiner Normalen in einem von 0° verschiedenen Winkel zu der Drehachse angeordnet ist, ergibt sich bei der Drehung des Polarisators um die Drehachse eine Taumelbewegung, welche eine Variation der Einfallswinkel des auf den Empfänger fallenden Lichts verursacht. Dadurch wird zumindest eine Veränderung der Position des Schattens auf dem Empfänger hervorgerufen. Je nach geometrischer Anordnung geht die Taumelbewegung mit einer sinusförmigen Intensitätsmodulation der detektierten Lichtintensität einher, welche bei einer Umdrehung um 360° genau eine Periode aufweist. Die Taumelbewegung verursacht somit eine Brechung der Symmetrie, die gezielt zur Generierung einer eindeutigen Winkelinformation über 360° genutzt werden kann.

Vorzugsweise ist der Winkel größer als 0° und kleiner als 45°, liegt vorzugsweise zwischen 3° und 20° und beträgt besonders bevorzugt etwa 5°. Ein derartiger Winkel führt bereits zu einer signifikanten Änderung der Position des Schattens auf dem Empfänger und/oder zu einer signifikanten Intensitätsmodulation der Lichtintensität in dem einen oder mehreren Empfangselementen, die eine eindeutige Bestimmung des Winkels über 360° ermöglicht.

Vorzugsweise ist das schattenwerfende Element als teildurchlässiges oder als lichtundurchlässiges Element ausgebildet, was besonders kostengünstig zu fertigen ist. Lichtundurchlässige Elemente liefern einen größtmöglichen Kontrast, aber auch teildurchlässige Elemente können bereits einen ausreichend großen Kontrast hervorrufen, der eine eindeutige Bestimmung des Winkels über 360° ermöglicht.

Gemäß einer besonders bevorzugten Ausführungsform der Erfindung ist das schattenwerfende Element durch die Lichtquelle oder den Träger der Lichtquelle gebildet. Sofern die Lichtquelle nicht in der Ebene des Empfängers angeordnet ist, ergibt sich damit eine besonders kostengünstige Realisierung des schattenwerfenden Elementes.

Gemäß einer bevorzugten Ausführungsform der Erfindung ist das schattenwerfende Element als teildurchlässige oder als lichtundurchlässigen Abdeckung des Empfängers mit einer vorzugsweise runden Aussparung ausgebildet. Derartige teildurchlässige oder lichtundurchlässige Abdeckungen des Empfängers haben zudem den Vorteil, dass der Einfall von Streulicht reduziert wird.

Gemäß einer bevorzugten Ausführungsform der Erfindung ist das schattenwerfende Element als Trägerplatte, insbesondere als Leiterplatte, mit einer vorzugsweise runden Aussparung ausgebildet, wobei der Empfänger auf der dem einfallenden Licht abgewandten Seite der Trägerplatte, insbesondere der Leiterplatte angeordnet, ist. Dadurch wird die Möglichkeit eines kompakten Aufbaus, insbesondere in Form einer integrierten Schaltung, gegeben.

Das schattenwerfende Element kann grundsätzlich jede beliebige Geometrie aufweisen. Vorzugsweise weist das schattenwerfende Element eine kreisförmige Geometrie auf, da es auf diese Weise kostengünstig zu fertigen ist und die Auswertung vereinfacht wird.

Vorzugsweise weist die Quadrantendiode wenigstens einen oder zwei, vorzugsweise drei, vier oder mehr, Quadranten auf, welche vorzugsweise jeweils gleiche Flächenanteile aufweisen, was die Auswertung der detektierten Signale vereinfacht.

Gemäß einer bevorzugten Ausführungsform der Erfindung weist die Lichtquelle eine optische Achse auf, welche mit der Drehachse übereinstimmt, wodurch sich ein kompakter Aufbau der Vorrichtung ergibt.

Vorteilhafterweise ist das erste Empfangselement Teil einer ersten Gruppe von n-Empfangselementen, wobei vor jedem der n-Empfangselemente ein Polarisationselement angeordnet ist und die Polarisationsrichtungen der Polarisationselemente gegeneinander verdreht sind, vorzugsweise jeweils um 180° durch n, wobei n die Anzahl der Empfangselemente der ersten Gruppe ist mit größer oder gleich 1, und der Empfänger vorzugsweise wenigstens eine weitere Gruppe, vorzugsweise drei weitere Gruppen aufweist, welche jeweils identisch zu der ersten Gruppe ausgebildet sind und vorzugsweise symmetrisch auf dem Empfänger angeordnet sind. Durch die Verwendung von mehreren Empfangselementen und vorzugsweise mehreren Polarisationsrichtungen ergibt sich die Möglichkeit zur Verbesserung der Genauigkeit der Vorrichtung hinsichtlich der Signalauswertung. Bei einer Vielzahl von Empfangselementen oder Gruppen mit unterschiedlich detektierbarer Polarisationsrichtung ergeben sich vielfache Möglichkeiten für Differenzauswertungen, z. B. zur Offset-Kompensation oder zur Minimierung von Einflüssen lokaler optischer Störungen, wie bspw. von lokalem Streulicht oder Schmutz auf dem Polarisator. Weiterhin haben mehrere Empfangselemente oder mehrere Gruppen den Vorteil, eine redundante Auswertung über verschiedene optische Kanäle zu ermöglichen.

Vorzugsweise sind jeweils zwei Empfangselemente mit gleicher Polarisationsrichtung punktsymmetrisch zu einer Symmetrieachse des Empfängers angeordnet. Symmetrische Anordnungen erleichtern die entsprechende Signalauswertung.

Vorzugsweise sind die Empfangselemente auf wenigstens einer, vorzugsweise auf zwei oder mehreren, rechteckigen, vorzugsweise quadratischen, oder kreisförmigen Spuren um ein Symmetriezentrum des Empfängers angeordnet. Auch dies führt insbesondere zu einem symmetrischen Aufbau und erleichtert die Signalauswertung.

Vorzugsweise sind das Empfangselement oder die Empfangselemente Teile der Quadranten der Quadrantendiode, wobei vorzugsweise in jedem Quadranten wenigstens zwei Empfangselemente mit unterschiedlicher Polarisationsrichtung angeordnet sind. Zur Bestimmung des Inkrementalsignals ist bereits ein Empfangselement mit einer Polarisationsrichtung pro Quadrant ausreichend.

Dabei können die Empfangselemente verschiedener Quadranten auch gleiche Polarisationsrichtung aufweisen. Wenn die einzelnen Quadranten aus polarisationsempfindlichen Flächen gebildet sind, werden vorzugsweise mindestens zwei unterschiedliche Polarisationsrichtungen detektiert, um trotz der Polarisation des Lichtes immer einen Kontrast zwischen dem Licht und dem Schatten auswerten zu können. Sind das Empfangselement oder die Empfangselemente Teile der Quadrantendiode, kann Fläche auf dem Empfänger eingespart werden.

Gemäß einer bevorzugten Ausführungsform der Erfindung sind die Lichtquelle, der Empfänger und eine Auswerteschaltung als integrierte Schaltung ausgebildet, um eine möglichst kompakte Vorrichtung zu ermöglichen.

Das erfindungsgemäße Verfahren zur Messung des Drehwinkels zweier relativ zueinander um eine Drehachse rotierender Objekte mit einer Vorrichtung gemäß einem der vorhergehenden Ansprüche, wobei die vom Empfänger gemessene Lichtintensität als drehwinkelabhängiges Signal ausgewertet wird, zeichnet sich dadurch aus, dass die von den einzelnen Empfangselementen und der Quadrantendiode gemessenen Lichtintensitäten als drehwinkelabhängiges Signal ausgewertet werden. Dadurch ergibt sich auf einfache Art und Weise die Möglichkeit, den Drehwinkel über eine volle Drehung von 360° absolut zu bestimmen.

Die Erfindung wird anhand der nachfolgenden Figuren ausführlich erläutert. Es zeigen:
- Fig. 1: eine schematische Darstellung einer Vorrichtung zur Messung des Drehwinkels zweier relativ zueinander rotierender Objekte gemäß einem ersten Ausführungsbeispiel der Erfindung,
- Fig. 2: eine schematische Darstellung einer Vorrichtung zur Messung des Drehwinkels zweier relativ zueinander rotierender Objekte gemäß einem zweiten Ausführungsbeispiel der Erfindung,
- Fig. 3: eine schematische Darstellung einer Vorrichtung zur Messung des Drehwinkels zweier relativ zueinander rotierender Objekte gemäß einem dritten Ausführungsbeispiel der Erfindung,
- Fig. 4: eine schematische Darstellung einer Vorrichtung zur Messung des Drehwinkels zweier relativ zueinander rotierender Objekte gemäß einem vierten Ausführungsbeispiel der Erfindung,
- Fig. 5: eine schematische Darstellung eines ersten Ausführungsbeispieles eines Empfängers für eine Vorrichtung gemäß einer der Figuren 1 bis 4,
- Fig. 6: eine schematische Darstellung eines zweiten Ausführungsbeispieles eines Empfängers für eine Vorrichtung gemäß einer der Figuren 1 bis 4,
- Fig. 7: eine schematische Darstellung eines dritten Ausführungsbeispieles eines Empfängers für eine Vorrichtung gemäß einer der Figuren 1 bis 4 und
- Fig. 8: eine schematische Darstellung eines vierten Ausführungsbeispieles eines Empfängers für eine Vorrichtung gemäß einer der Figuren 1 bis 4.

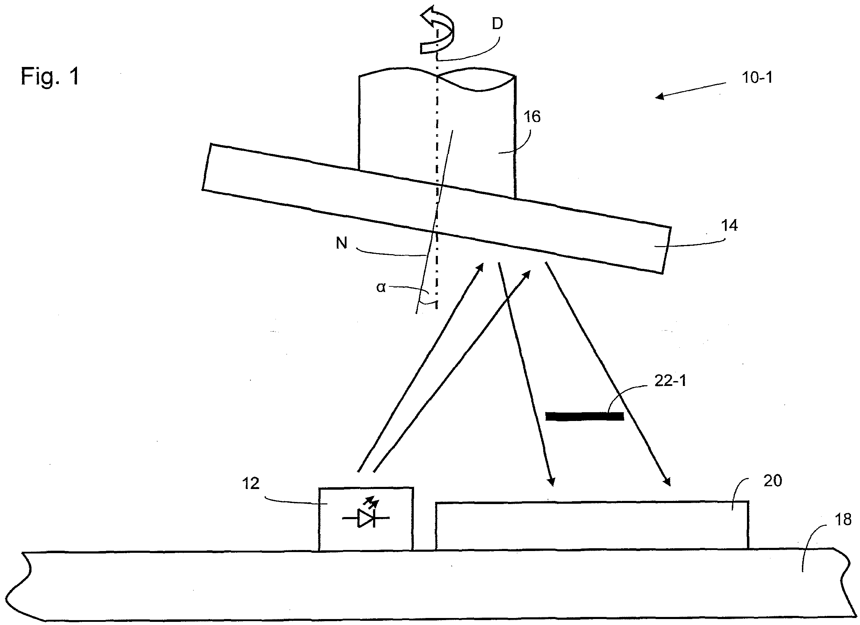

Figur 1 zeigt eine schematische Darstellung einer Vorrichtung 10-1 zur Messung des Drehwinkels zweier relativ zueinander um eine Drehachse D rotierender Objekte, insbesondere des Drehwinkels der Drehung einer Welle 16 um die Drehachse D relativ zu einem feststehenden Objekt, wie bspw. der Umgebung, einem Gehäuse oder einem Träger. An der Welle 16 ist ein Polarisator 14 angeordnet, welcher als linearer Polarisator ausgebildet ist. Der Polarisator 14 ist insbesondere als Scheibe ausgebildet und weist eine Normale N auf, welche in einem Winkel α zur Drehachse D angeordnet ist. Der Polarisator 14 ist somit gegen die Drehachse D verkippt. Der Polarisator 14 kann vorzugsweise als runde Scheibe ausgebildet sein. Alternativ kann jedoch die Geometrie des Polarisators 14 beliebige Formen annehmen. Der Polarisator 14 kann weiterhin derart an der Welle 16 angeordnet sein, dass die Normale N nicht zwangsläufig einen Schnittpunkt mit der Drehachse D aufweist. Wie in der Figur 1 dargestellt, ist der Polarisator 14 an der Stirnfläche der Welle 16 angeordnet. Alternativ kann die Welle 16 auch durch eine Ausnehmung des Polarisators 14 geführt sein. Dies ermöglicht insbesondere die Ausgestaltung der Welle 16 als Hohlwelle.

Der Polarisator 14 ist reflektierend ausgebildet und kann insbesondere spiegel-reflektierend, diffus-reflektierend oder streuend-reflektierend ausgelegt sein. In einer nicht dargestellten alternativen Ausführungsform kann der Polarisator 14 jedoch auch transmittierend ausgebildet sein.

Der Polarisator 14 wird mit einer Lichtquelle 12 beleuchtet. Die Lichtquelle 12 weist eine optische Achse auf, welche mit der Drehachse D zusammenfallen kann. Die Lichtquelle 12 ist vorzugsweise als unpolarisierte Lichtquelle 12, bspw. als Glühlampe oder LED, ausgebildet, kann jedoch alternativ auch als kohärente Lichtquelle, wie bspw. als Laser oder Laserdiode, ausgebildet sein. Die Lichtquelle 12 sendet vorzugsweise einen divergenten Lichtkegel aus, um den Polarisator 14 großflächig zu beleuchten. Vorzugsweise ist der Lichtkegel der Lichtquelle 12 homogen. Das Intensitätsprofil der Lichtquelle 12 ist vorzugsweise rotationssymmetrisch und hat vorzugsweise ihren Intensitätsschwerpunkt auf der optischen Achse. Die Lichtquelle 12 kann konstant leuchten oder gepulst ausgebildet sein. Grundsätzlich ist auch denkbar, mehrere Lichtquellen 12 zu verwenden.

Die Vorrichtung 10-1 weist einen Empfänger 20 auf, der auf einem Träger 18 angeordnet ist. Das Licht der Lichtquelle 12 wird durch den Polarisator 14 linear polarisiert und reflektiert, sodass es auf den Empfänger 20 fällt. Der Empfänger 20 weist wenigstens ein Empfangselement mit einem Polarisationsfilter mit einer ersten Polarisationsrichtung auf. Bei Drehung der Welle 16 und somit des Polarisators 14 um 360° detektiert ein Empfangselement des Empfängers eine sinusquadratförmige Intensitätsverteilung.

Bei dem in Figur 1 dargestellten Ausführungsbeispiel der Vorrichtung 10-1 ist die Lichtquelle 12 auf dem Träger 18 neben dem Empfänger 20 angeordnet. Vor den Empfänger 20 ist beabstandet ein schattenwerfendes Element 22-1 angeordnet, insbesondere zwischen dem Empfänger 20 und dem Polarisator 14. Die Anordnung kann mittels eines nicht dargestellten Abstandshalters erfolgen. Das schattenwerfende Element 22-1 blendet einen Teil des von der Lichtquelle 12 auf den Polarisator 14 fallenden und von dem Polarisator 14 in Richtung des Empfängers 20 reflektierten Lichtes aus und wirft einen Schatten auf dem Empfänger 20. Das schattenwerfende Element 22-1 kann jede beliebige Geometrie annehmen, ist jedoch vorzugsweise rund oder quadratisch ausgebildet.

Durch die Verkippung des Polarisators 14 gegen die Drehachse D wird eine Taumelbewegung des Polarisators 14 hervorgerufen, welche zu einer Variation der Einfallswinkel des auf den Empfänger fallenden Lichts führt. Aufgrund der Taumelbewegung des Polarisators 14 variieren die Position und/oder die Form des Schattens des schattenwerfenden Elementes 22-1 auf dem Empfänger 20. Je nach geometrischer Anordnung wird durch die Taumelbewegung die Intensität auf einem polarisationsempfindlichen Empfangselement über eine volle Drehung sinusförmig moduliert, sodass die wenigstens zwei bei einer Drehung um 360° auftretenden Intensitätsmaxima eine unterschiedliche Höhe aufweisen.

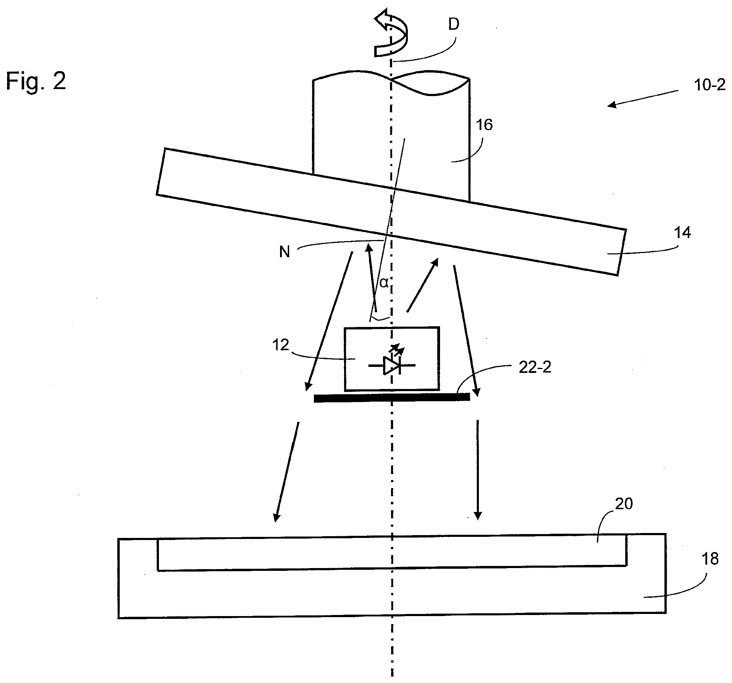

Figur 2 zeigt ein weiteres Ausführungsbeispiel einer Vorrichtung 10-2, welche sich von der in Figur 1 dargestellten Vorrichtung 10-1 im Wesentlichen dadurch unterscheidet, dass die Lichtquelle 12 zwischen dem Träger 18 und der Welle 16 beabstandet zum Träger 18 angeordnet ist. Die Lichtquelle 12 ist dabei vorzugsweise derart angeordnet, dass die optische Achse der Lichtquelle 12 im Wesentlichen mit der Drehachse D zusammenfällt. Die Lichtquelle 12 ist auf einem Träger angeordnet, der ein schattenbildendes Element 22-2 bildet. Alternativ kann auch die Lichtquelle 12 selbst das schattenwerfende Element 22-2 bilden. Dadurch, dass die Lichtquelle 12 zwischen dem Empfänger 20 und dem Polarisator 14 angeordnet ist, wirft die Lichtquelle 12 oder das schattenwerfende Element 22-2 einen Schatten auf den Empfänger 20. Durch die Taumelbewegung des Polarisators 14 wird die Position des Schattens auf dem Empfänger 20 verändert. Ist das schattenwerfende Element 22-2 vorzugsweise rotationssymmetrisch zur Drehachse D angeordnet, insbesondere kreisförmig ausgebildet, ergibt sich ein kreisförmiger Schatten, der sich bei Drehung des Polarisators 14 auf einer Kreisbahn um die Drehachse D bewegt.

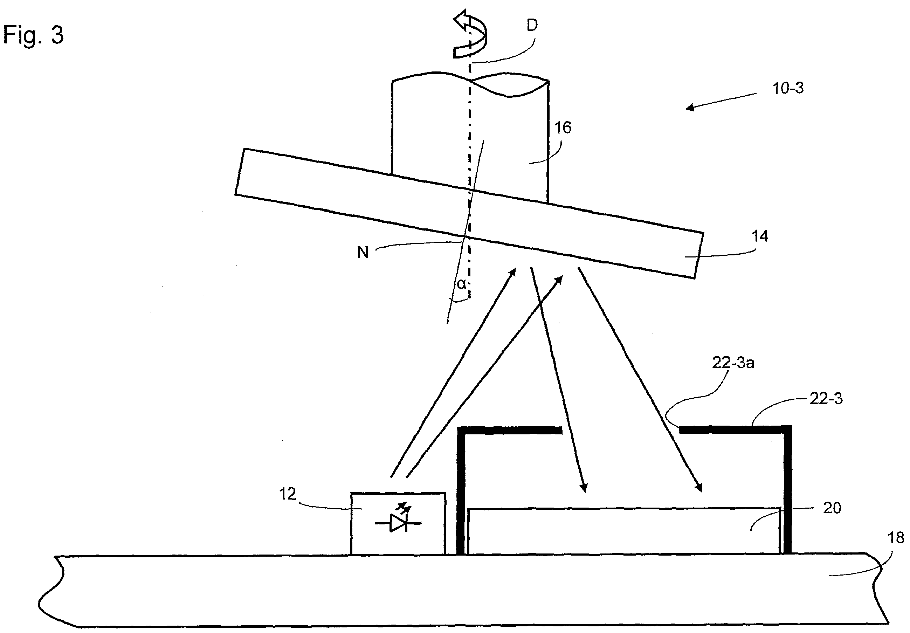

Figur 3 zeigt ein weiteres Ausführungsbeispiel einer Vorrichtung 10-3, welche sich von der in Figur 1 dargestellten Vorrichtung 10-1 lediglich in der Ausgestaltung des schattenwerfenden Elements unterscheidet. Die Vorrichtung 10-3 weist ein schattenwerfendes Element 22-3 auf, welches als lichtundurchlässiges Gehäuse, welches um den Empfänger 20 angeordnet ist, ausgebildet ist, welches auf seiner Deckseite eine Aussparung 22-3a aufweist, durch welche Licht in das Innere des Gehäuses und auf den Empfänger 20 fallen kann. Ist die Aussparung 22-3a rund ausgebildet, ergibt sich idealerweise ein runder oder ovaler Lichtfleck, welcher auf einer Kreisbahn oder einer Ellipsenbahn bei Drehung des Polarisators 14 um die Drehachse D wandert. Bei entsprechender relativer Anordnung zwischen der Lichtquelle 12, dem Empfänger 20 und der Drehachse D mit dem Polarisator 14 und entsprechender Ausgestaltung der Aussparung 22-3a kann idealerweise ein runder Lichtfleck erzeugt werden, der sich auf einer Kreisbahn bewegt.

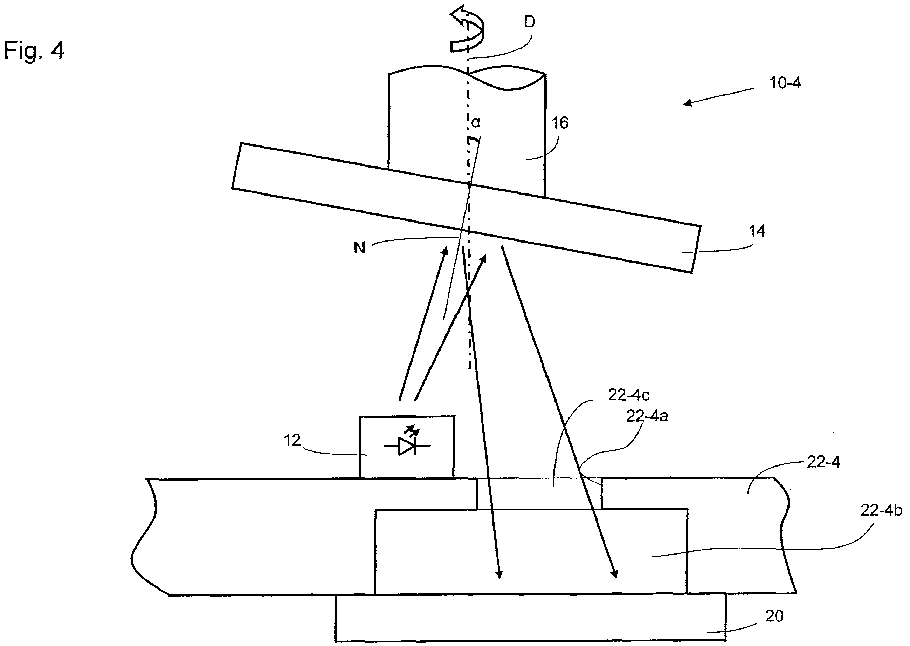

Figur 4 zeigt ein weiteres Ausführungsbeispiel einer Vorrichtung 10-4 mit einem weiteren Ausführungsbeispiel eines schattenwerfenden Elements 22-4, welches den Träger für den Empfänger 20 bildet, wobei der Empfänger 20 jedoch auf der dem Polarisator 14 oder dem Lichteinfall abgewandten Seite des Trägers, das heißt des schattenwerfenden Elements 22-4, angeordnet ist. Das schattenwerfende Element 22-4 weist eine Aussparung 22-4a auf, durch welche das von dem Polarisator 14 kommende Licht auf den Empfänger 20 fallen kann. Die Aussparung 22-4a weist dabei einen ersten Abschnitt 22-4b direkt vor dem Empfänger 20 mit einem größeren Durchmesser und einem zweiten Abschnitt 22-4c mit einem kleineren Durchmesser auf der dem Polarisator 14 zugewandten Seite des Trägers auf. Der zweite Abschnitt 22-4c fungiert als Blende und strahlbegrenzendes Element und somit insbesondere als eigentlicher schattenwerfender Abschnitt, während der erste Abschnitt 22-4b gewährleistet, dass der erzeugte Lichtfleck bei Variation seiner Position ohne weitere Abschattung auf dem Empfänger 20 abgebildet wird. In dieser Ausführungsform bildet das schattenwerfende Element 22-4 vorzugsweise ebenfalls den Träger für die Lichtquelle 12. Der Träger ist insbesondere als Leiterplatte ausgebildet, was die Möglichkeit der Bildung einer integrierten Schaltung bietet.

Es besteht die Möglichkeit, auch mehrere schattenwerfende Elemente einzusetzen. Die Form des schattenwerfenden Elements kann beliebige Formen annehmen. Bevorzugt ist jedoch eine runde oder ringförmige Ausgestaltung, um die Signalauswertung und die Fertigung zu vereinfachen.

Die Lichtquelle 12, der Empfänger 20 und das schattenwerfende Element sind vorzugsweise auf einem Chip integriert, um ein möglichst kompaktes System bereitzustellen.

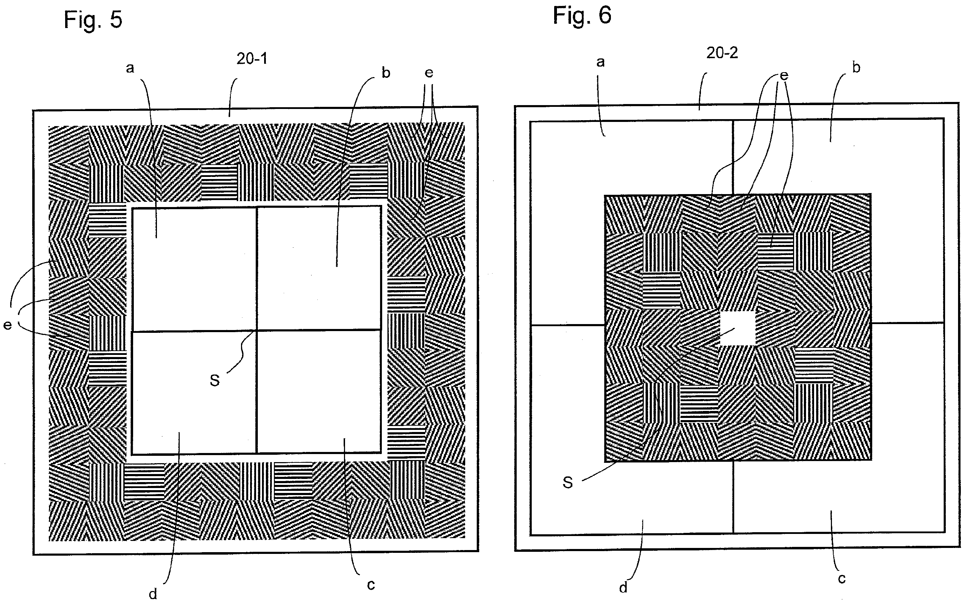

Die Bewegung des Schattens oder des Lichtflecks wird wie im Folgenden anhand der Figuren 5 bis 8 beschrieben mit einer erfindungsgemäßen Ausgestaltung des Empfängers 20 detektiert. Die Figuren 5 bis 8 zeigen vier verschiedene Ausgestaltungen von Empfängern 20, wobei jeder der in Figuren 5 bis 8 dargestellten Empfänger in jeder der in den Figuren 1 bis 4 dargestellten Vorrichtungen verwendet werden kann.

Figur 5 zeigt eine schematische Darstellung eines ersten Ausführungsbeispiels eines Empfängers 20-1, welcher quadratisch ausgebildet ist. Im Innenbereich ist eine Quadrantendiode 24-1 mit vier Quadranten a, b, c, d angeordnet. Die Quadrantendiode 24-1 zeigt dabei eine quadratische Anordnung von vier großflächigen, gleichen und insbesondere ebenfalls quadratisch ausgebildeten photosensitiven Flächen, insbesondere Dioden. Die photosensitiven Flächen sind eng beieinander angeordnet, sodass im Wesentlichen lediglich ein schmaler, kreuzförmiger Spalt zwischen den Quadranten a, b, c, d liegt. Das Zentrum des kreuzförmigen Spalts bildet ein Symmetriezentrum S.

Die Positionsbestimmung des Schattens oder des Lichtflecks auf der Quadrantendiode 20-1 wird durch Vergleich der in den jeweiligen Quadranten a, b, c, d detektierten Ströme festgestellt. Über das Verhältnis der Ströme der einzelnen Quadranten a, b, c, d lässt sich eine Aussage über die Flächenbelegung jedes Quadranten a, b, c, d treffen und somit die Position des Schattens oder Lichtflecks bestimmt werden.

Um die Quadrantendiode 24-1 ist wenigstens ein, in der dargestellten Ausführungsform eine Vielzahl von Empfangselementen e angeordnet, vor welchen Polarisationsfilter mit wenigstens einer Polarisationsrichtung, vorliegend beispielsweise mit acht unterschiedlichen Polarisationsrichtungen, angeordnet sind. Die Polarisationsrichtungen sind dabei vorzugsweise um 180° durch n, das heißt im vorliegenden Beispiel um 180°/8 = 22,5°, gegeneinander verdreht.

Jeweils zwei Empfangselemente e mit gleicher Polarisationsrichtung sind punktsymmetrisch zu dem Symmetriezentrum S des Empfängers 20-1 angeordnet. Die Empfangselemente e des Empfängers 20-1 sind auf zwei quadratischen Spuren um das Symmetriezentrum S des Empfängers 20-1 angeordnet.

In einem Empfangselement e des Empfängers 20-1, vor welchem ein Polarisationsfilter mit einer ersten Polarisationsrichtung angeordnet ist, ergibt sich ein sinusquadratförmiges Intensitätssignal. Damit ist allerdings noch keine exakte absolute Winkelbestimmung über 360° möglich. Mit Hilfe der Positionsbestimmung des Lichtflecks oder des Schattens durch die Quadrantendiode ist eine eindeutige absolute Winkelbestimmung über 360° möglich.

Die Vielzahl der Empfangselemente e, vorzugsweise mit unterschiedlichen Polarisationsrichtungen, verbessern die Genauigkeit der Winkelbestimmung und geben zusätzliche Möglichkeiten, die detektierten Signale zu korrigieren, Fehler zu eliminieren und gegebenenfalls redundante optische Kanäle bereitzustellen. Über die Signale von mehreren Empfangselementen e mit gleicher Polarisationsrichtung kann zur Verbesserung der Signalauswertung gemittelt werden. Zusätzlich können auch Gruppen von Empfangselementen e gebildet werden, innerhalb derer nur Empfangselemente e mit unterschiedlicher Polarisationsrichtung angeordnet sind, was weitere Möglichkeiten zur Signalauswertung bietet.

Figur 6 zeigt ein zweites Ausführungsbeispiel eines Empfängers 20-2 mit einem weiteren Ausführungsbeispiel einer Quadrantendiode 24-2 mit Quadranten a, b, c, d. Der Empfänger 20-2 weist im Innern einen Bereich mit Empfangselementen e unterschiedlicher Polarisationsrichtung auf. Insbesondere sind 48 Empfangselemente e in drei konzentrischen Spuren um ein Symmetriezentrum S angeordnet. Dabei sind in den einzelnen Spuren Empfangselemente e mit gleicher Polarisationsrichtung punktsymmetrisch zu dem Symmetriezentrum S angeordnet.

Die vier Quadranten a, b, c, d der Quadrantendiode 24-2 sind um den inneren Bereich mit den 48 Empfangselementen e angeordnet. Die Quadranten a, b, c, d sind insbesondere L-förmig mit gleich langen Schenkeln ausgebildet. Die Quadranten a, b, c, d bilden eine Art Rahmen um den inneren Bereich mit den Empfangselementen e. Auch mit einer derartigen Quadrantendiode 24-2 ist es möglich, die Position eines Lichtflecks oder Schattens, welcher auf dem Empfänger 20-2 taumelt, zu bestimmen. Eine derartige Anordnung der Quadranten a, b, c, d ist insbesondere für einen ringförmigen Lichtfleck von Vorteil.

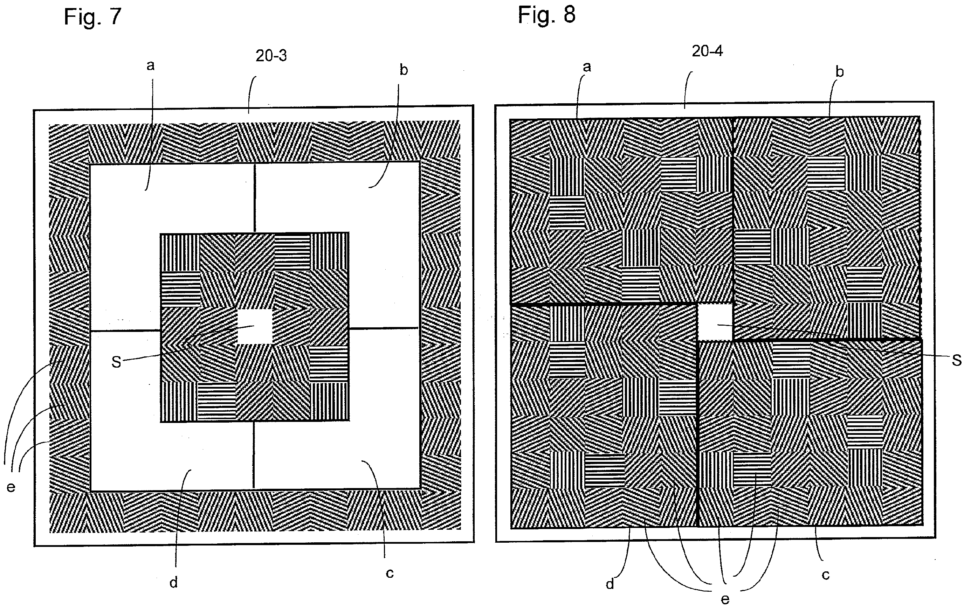

Figur 7 zeigt ein weiteres Ausführungsbeispiel eines Empfängers 20-3 mit einer Quadrantendiode 24-3 mit Quadranten a, b, c, d. Die Anordnung der Quadrantendiode 24-3 entspricht im Wesentlichen der Quadrantendiode 24-2 des in Figur 6 dargestellten Ausführungsbeispiels des Empfängers 20-2. In dem inneren Bereich innerhalb der Quadranten a, b, c, d sind vorliegend allerdings lediglich 24 Empfangselemente e in zwei konzentrischen quadratischen Spuren um das Symmetriezentrum S angeordnet. Zusätzlich weist der Empfänger 20-3 eine dritte Spur von Empfangselementen e konzentrisch um das Symmetriezentrum S außen angrenzend an die Quadranten a, b, c, d auf.

Figur 8 zeigt ein viertes Ausführungsbeispiel eines Empfängers 20-4 mit einer Quadrantendiode 24-4 mit Quadranten a, b, c, d. In diesem Ausführungsbeispiel sind die Empfangselemente e Teil der Quadranten a, b, c, d. Jeder Quadrant a, b, c, d weist insbesondere 30 Empfangselemente e auf. Zur Bestimmung der Position des Lichtflecks oder des Schattens wird als Signal eines einzelnen Quadranten a, b, c, d das Summensignal sämtlicher in dem entsprechenden Quadranten a, b, c, d angeordneten Empfangselemente e bestimmt.

Zu betonen ist, dass die Form und Fläche der Quadranten a, b, c, d der Quadrantendioden 24-1, 24-2, 24-3, 24-4 beliebig ausgestaltet sein kann. Zur vereinfachten Signalauswertung sind die Flächen der Quadranten a, b, c, d jeweils identisch und besonders bevorzugt von gleicher Form. In den Figuren 5 bis 8 sind lediglich quadratische oder rechteckige Ausführungsformen dargestellt. Selbstverständlich sind insbesondere auch runde oder ovale Anordnungen denkbar, bei welchen die Quadranten a, b, c, d als Kreissegmente ausgebildet sind.

Weiterhin zeigen die Figuren 5 bis 8 lediglich Quadrantendioden 24-1, 24-2, 24-3, 24-4 mit vier Quadranten a, b, c, d. Es sind jedoch auch Quadrantendioden mit drei oder mehr als vier Quadranten denkbar, welche vorzugsweise wiederum gleiche Fläche und insbesondere gleiche Form aufweisen.

In alternativen Ausführungsformen können auch mehrere Quadrantendioden auf einem Empfänger angeordnet werden. Weiterhin können die Quadranten der Quadrantendiodenanordnung jeweils in sich in diskrete einzelne Empfangselemente aufgeteilt sein. Auf diese Weise lässt sich eine dynamische Position, Form und Größe der einzelnen Quadranten und damit der Quadrantendiodenanordnung realisieren.

### Bezugszeichenliste

- 10-1: Vorrichtung
- 10-2: Vorrichtung
- 10-3: Vorrichtung
- 10-4: Vorrichtung
- 12: Lichtquelle
- 14: Polarisator
- 16: Welle
- 18: Träger

- 20: Empfänger
- 20-1: Empfänger
- 20-2: Empfänger
- 20-3: Empfänger
- 20-4: Empfänger
- 22-1: Schattenwerfendes Element
- 22-2: Schattenwerfendes Element
- 22-3: Schattenwerfendes Element
- 22-3a: Aussparung
- 22-4: Schattenwerfendes Element
- 22-4a: Aussparung
- 22-4b: Erster Abschnitt
- 22-4c: Zweiter Abschnitt
- 24-1: Quadrantendiode
- 24-2: Quadrantendiode
- 24-3: Quadrantendiode
- 24-4: Quadrantendiode

- a, b, c, d: Quadrant
- e: Empfangselement
- S: Symmetriezentrum
- D: Drehachse
- N: Normale
- α: Winkel

## Patentansprüche

1. Vorrichtung (10-1, 10-2, 10-3, 10-4) zur Messung des Drehwinkels zweier relativ zueinander um eine Drehachse (D) rotierender Objekte, mit einer Lichtquelle (12), mit einem Polarisator (14), wobei sich die Lichtquelle (12) und der Polarisator (14) in Abhängigkeit vom Drehwinkel relativ zueinander drehen, und mit einem Empfänger (20, 20-1, 20-2, 20-3, 20-4), der die durch den Polarisator (14) reflektierte Lichtintensität misst, um ein drehwinkelabhängiges Signal zu erzeugen, wobei der Empfänger (20, 20-1, 20-2, 20-3, 20-4) wenigstens ein erstes Empfangselement (e) aufweist, und wobei entweder das von der Lichtquelle (12) ausgesandte Licht polarisiert ist oder polarisiert wird und/oder wobei vor dem ersten Empfangselement (e) ein Polarisationsfilter mit einer ersten Polarisationsrichtung angeordnet ist, wobei vor dem Empfänger (20, 20-1, 20-2, 20-3, 20-4) wenigstens ein schattenwerfendes Element (22-1, 22-2, 22-3, 22-4) angeordnet ist, dass der Empfänger (20, 20-1, 20-2, 20-3, 20-4) wenigstens eine Quadrantendiode aufweist und dass Mittel zur Variation der Position und/oder der Form des Schattens auf dem Empfänger über eine Drehung um 360° vorgesehen sind,
**dadurch gekennzeichnet, dass** die Mittel dadurch realisiert sind, dass der Polarisator (14) als Scheibe mit einer Normalen (N) ausgebildet ist, wobei die Normale (N) der Scheibe in einem von 0° verschiedenen Winkel (α) zu der Drehachse (D) angeordnet ist.

2. Vorrichtung nach Anspruch 1,
**dadurch gekennzeichnet, dass** die Mittel dadurch realisiert sind, dass der Polarisator einen polarisierenden Bereich und einen nicht polarisierenden Bereich aufweist, wobei der nicht polarisierende Bereich exzentrisch zur Drehachse angeordnet ist.

3. Vorrichtung nach Anspruch 1 oder 2,
**dadurch gekennzeichnet, dass** der Winkel (α) größer als 0° und kleiner als 45° ist und vorzugsweise etwa 5° beträgt.

4. Vorrichtung nach einem der vorhergehenden Ansprüche,
**dadurch gekennzeichnet, dass** das schattenwerfende Element (22-1, 22-2) als teildurchlässiges oder lichtundurchlässiges Element ausgebildet ist.

5. Vorrichtung nach einem der vorhergehenden Ansprüche,
**dadurch gekennzeichnet, dass** das schattenwerfende Element (22-2) durch die Lichtquelle (12) oder den Träger der Lichtquelle (12) gebildet ist.

6. Vorrichtung nach einem der vorhergehenden Ansprüche,
**dadurch gekennzeichnet, dass** das schattenwerfende Element (22-3, 22-4) als teildurchlässige oder lichtundurchlässige Abdeckung des Empfängers (20, 20-1, 20-2, 20-3, 20-4) mit einer Aussparung (22-3a, 22-4a) ausgebildet ist.

7. Vorrichtung nach einem der vorhergehenden Ansprüche,
**dadurch gekennzeichnet, dass** das schattenwerfende Element (22-4) als Trägerplatte, insbesondere als Leiterplatte, mit einer Aussparung (22-4a) ausgebildet ist, wobei der Empfänger (20, 20-1, 20-2, 20-3, 20-4) auf der dem einfallenden Licht abgewandten Seite der Trägerplatte, insbesondere der Leiterplatte, angeordnet ist.

8. Vorrichtung nach einem der vorhergehenden Ansprüche,
**dadurch gekennzeichnet, dass** das schattenwerfende Element (22-1, 22-2, 22-3, 22-4) eine kreisförmige Geometrie aufweist.

9. Vorrichtung nach einem der vorhergehenden Ansprüche,
**dadurch gekennzeichnet, dass** die Quad-rantendiode einen oder zwei, vorzugsweise drei, vier oder mehr, Quadranten (a, b, c, d) aufweist, welche vorzugsweise jeweils gleiche Flächenanteile aufweisen.

10. Vorrichtung nach einem der vorhergehenden Ansprüche,
**dadurch gekennzeichnet, dass** die Lichtquelle (12) eine optisch Achse aufweist, welche mit der Drehachse (D) übereinstimmt.

11. Vorrichtung nach einem der vorhergehenden Ansprüche,
**dadurch gekennzeichnet, dass** das erste Empfangselement (e) Teil einer ersten Gruppe von n Empfangselementen (e) ist, wobei vor jedem der n Empfangselemente (e) ein Polarisationselement angeordnet ist und die Polarisationsrichtungen der Polarisationselemente gegeneinander verdreht sind, vorzugsweise jeweils um 180°/n, wobei n die Anzahl der Empfangselemente (e) der ersten Gruppe ist mit n größer oder gleich 1, und der Empfänger (20, 20-1, 20-2, 20-3, 20-4) vorzugsweise wenigstens eine weitere Gruppe, vorzugsweise drei weitere Gruppen aufweist, welche jeweils identisch zu der ersten Gruppe ausgebildet sind und vorzugsweise symmetrisch auf dem Empfänger (20, 20-1, 20-2, 20-3, 20-4) angeordnet sind.

12. Vorrichtung nach Anspruch 11,
**dadurch gekennzeichnet, dass** jeweils zwei Empfangselemente (e) mit gleicher Polarisationsrichtung punktsymmetrisch zu einem Symmetriezentrum (S) des Empfängers (20, 20-1, 20-2, 20-3, 20-4) angeordnet sind.

13. Vorrichtung nach Anspruch 11 oder 12,
**dadurch gekennzeichnet, dass** die Empfangselemente (e) auf wenigstens einer, vorzugsweise auf zwei oder mehreren, rechteckigen, vorzugsweise quadratischen, oder kreisförmigen Spuren um ein Symmetriezentrum (S) des Empfängers (20, 20-1, 20-2, 20-3, 20-4) angeordnet sind.

14. Vorrichtung nach einem der vorhergehenden Ansprüche,
**dadurch gekennzeichnet, dass** das Empfangselement (e) oder die Empfangselemente (e) Teile der Quadranten (a, b, c, d) der Quadrantendiode sind, wobei vorzugsweise in jedem Quadranten (a, b, c, d) wenigstens zwei Empfangselemente (e) mit unterschiedlicher Polarisationsrichtung angeordnet sind.

15. Vorrichtung nach einem der vorhergehenden Ansprüche,
**dadurch gekennzeichnet, dass** die Lichtquelle (12), der Empfänger (20, 20-1, 20-2, 20-3, 20-4) und eine Auswerteschaltung als integrierte Schaltung ausgebildet sind.

16. Verfahren zur Messung des Drehwinkels zweier relativ zueinander um eine Drehachse (D) rotierender Objekte mit einer Vorrichtung gemäß einem der vorhergehenden Ansprüche, wobei die vom Empfänger (20, 20-1, 20-2, 20-3, 20-4) gemessene Lichtintensität als drehwinkelabhängiges Signal ausgewertet wird,
**dadurch gekennzeichnet, dass** die von den einzelnen Empfangselementen (e) und der Quadrantendiode gemessenen Lichtintensitäten als drehwinkelabhängiges Signal ausgewertet werden.

## Claims

1. Device (10-1, 10-2, 10-3, 10-4) for measuring the angle of rotation of two rotating objects rotating relative to each other about a rotational axis (D), comprising a light source (12), with a polarizer (14), wherein the light source (12) and the polarizer (14) rotate relative to one another in dependence of the rotation angle, and with a receiver (20, 20-1, 20-2, 20-3, 20-4), which measures reflected light intensity through the polarizer (14) to produce a rotation angle-dependent signal, wherein the receiver (20, 20-1, 20-2, 20-3, 20-4) comprises at least a first receiving element (e), and wherein either the emitted light of the light source (12) is polarized or is getting polarized and / or wherein a polarizing filter is arranged in front of the first reception element (e) with a first polarization direction, wherein at least one shadow-casting element (22-1, 22-2, 22-3, 22-4) is arranged in front of the receiver (20, 20-1, 20-2, 20-3, 20 -4), in that the receiver (20, 20-1, 20-2, 20-3, 20-4) comprises at least a quadrant diode, and in that means for varying the position and / or the shape of the shadow are provided on the receiver over a rotation through 360 °,
**characterized in that** the means are realized **in that** the polarizer (14) is formed as a disc with a normal (N), wherein the normal (N) of the disc is arranged in an angle (α) different from 0° to the rotational axis (D).

2. Device according to claim 1, **characterized in that** the means are realized **in that** the polarizer comprises a polarizing region and a non-polarizing region, said non-polarizing region is disposed eccentrically to the axis of rotation.

3. Device according to claim 1 or 2, **characterized in that** the angle (α) is greater than 0 ° and smaller than 45 ° and preferably about 5 °.

4. Device according to one of the preceding claims, **characterized in that** the shadow-casting element (22-1, 22-2) is formed as a partially translucent or opaque member.

5. Device according to one of the preceding claims, **characterized in that** the shadow-casting element (22-2) is formed by the light source (12) or the support of the light source (12).

6. Device according to one of the preceding claims, **characterized in that** the shadow-casting element (22-3, 22-4) is formed as a partially transparent or opaque cover of the receiver (20, 20-1, 20-2, 20-3, 20-4) with a recess (22-3a, 22-4a).

7. Device according to one of the preceding claims, **characterized in that** the shadow-casting element (22-4) is formed as a carrier plate, in particular as a circuit board, with a recess (22-4a), wherein the receiver (20, 20-1, 20 -2, 20-3, 20-4) is arranged on that side carrier plate, in particular the printed circuit board, which faces away the incident light.

8. Device according to one of the preceding claims, **characterized in that** the shadow-casting element (22-1, 22-2, 22-3, 22-4) has a circular geometry.

9. Device according to one of the preceding claims, **characterized in that** the quadrant diode comprises one or two, preferably three, four or more, quadrants (a, b, c, d) preferably having identical surface portions,.

10. Device according to one of the preceding claims, **characterized in that** the light source (12) comprises an optically axis which coincides with the axis of rotation (D).

11. Device according to one of the preceding claims, **characterized in that** the first receiving element (e) is part of a first group of n receiving elements (e), wherein in front of each of the n receiving elements (E) there is arranged a polarization element and the polarization directions of the polarizing elements are rotated against each other, preferably by 180°/n, where n is the number of the receiving elements (e) of the first group with n larger than or equal to 1, and the receiver (20, 20-1, 20-2, 20-3, 20 -4) comprises preferably at least one further group, preferably three further groups each of which is formed identical to the first group, and are arranged preferably symmetrically to the receiver (20, 20-1, 20-2, 20-3, 20-4).

12. The apparatus according to claim 11, **characterized in that** in each case two receiving elements (e) are arranged with the same polarization direction point-symmetrically to a center of symmetry (S) of the receiver (20, 20-1, 20-2, 20-3, 20-4).

13. The apparatus of claim 11 or 12, **characterized in that** the receiving elements (e) are arranged on at least one, preferably two or more, rectangular, preferably square, or circular tracks about a center of symmetry (S) of the receiver (20, 20-1 are, 20-2, 20-3, 20-4).

14. Device according to one of the preceding claims, **characterized in that** the receiving element (e) or the receiving elements (e) are parts of the quadrants (a, b, c, d) of the quadrant diode, wherein preferably in each quadrant (A, B, c, d) at least two receiving elements (e) are arranged with different polarization direction.

15. Device according to one of the preceding claims, **characterized in that** the light source (12), the receiver (20, 20-1, 20-2, 20-3, 20-4) and an evaluation circuit are formed as an integrated circuit.

16. Method for measuring the rotation angle of two rotating objects rotating relative to each other about a rotational axis (D) with a device according to one of the preceding claims, wherein the measured light intensity is evaluated by the receiver (20, 20-1, 20-2, 20-3, 20-4) as a rotational angle-dependent signal, **characterized in that** the measured light intensities measured by the individual receiving elements (e) and the quadrant diode, are evaluated as a rotation angle-dependent signal.

## Revendications

1. Dispositif (01/10, 02/10, 03/10, 04/10) servant à mesurer l'angle de rotation de deux objets tournant en rotation par rapport à l'autre autour d'un axe de rotation (D), comprenant une source lumineuse (12) avec un polariseur (14), dans lequel la source lumineuse (12) et le polariseur (14) tournent par rapport à l'autre en fonction de l'angle de rotation et d'un récepteur (20, 20-1, 20-2, 20- 3, 20-4), qui mesure l'intensité lumineuse reflétée par le polariseur (14) pour produire un signal de rotation dépendant de l'angle, dans lequel le récepteur (20, 20-1, 20-2, 20-3, 20-4) comprend au moins un premier élément de réception (e), et dans lequel la lumière émise par la source lumineuse (12) est polarisée ou sera polarisée et/ou dans lequel un filtre de polarisation est disposé en face du premier élément de réception (e) avec une première direction de polarisation, dans lequel au moins un élément projetant des ombres (22-1, 22-2, 22-3, 22-4) est disposé en face du récepteur (20, 20-1, 20-2, 20-3 20 -4), en ce que le récepteur (20, 20-1, 20-2, 20-3, 20-4) comprend au moins une diode de quart de cercle, et en ce que les moyens pour faire varier la position et/ou la forme de l'ombre sont prévue sur le récepteur sur une rotation de 360 °,
**caractérisé en ce que** les moyens sont réalisés **en ce que** le polariseur (14) est réalisé sous la forme d'un disque avec une normale (N), dans lequel la normale (N) du disque est disposée dans un angle (α) différent de 0 ° par rapport à la rotation l'axe (D).

2. Dispositif selon la revendication 1, **caractérisé en ce que** les moyens sont réalisés **en ce que** le polariseur comprend une région de polarisation et une région non polarisante, dans lequel la région non polarisante est disposée excentriquement par rapport à l'axe de rotation.

3. Dispositif selon la revendication 1 ou 2, **caractérisé en ce que** l'angle (α) est supérieur à 0 ° et inférieur à 45 ° et de préférence d'environ 5 °.

4. Dispositif selon l'une des revendications précédentes, **caractérisé en ce que** l'élément projetant des ombres (22-1, 22-2) est formé comme un élément partiellement translucide ou opaque.

5. Dispositif selon l'une des revendications précédentes, **caractérisé en ce que** l'élément projetant des ombres (22-2) est formé par la source lumineuse (12) ou le support de la source lumineuse (12).

6. Dispositif selon l'une des revendications précédentes, **caractérisé en ce que** l'élément projetant des ombres (22-3, 22-4) est réalisé sous la forme d'un couvercle partiellement transparent ou opaque du récepteur (20, 20-1, 20-2, 20-3, 20-4) avec une niche (22-3a, 22-4a).

7. Dispositif selon l'une des revendications précédentes, **caractérisé en ce que** l'élément projetant des ombres (22-4) est formé comme une plaque de support, en particulier un circuit imprimé, avec une niche (22-4a), dans lequel le récepteur (20, 20-1, 20 -2, 20-3, 20-4) est disposé sur la plaque de support latéral, en particulier le circuit imprimé, qui est opposé à la lumière incidente.

8. Dispositif selon l'une des revendications précédentes, **caractérisé en ce que** l'élément projetant des ombres (22-1, 22-2, 22-3, 22-4) présente une géométrie circulaire.

9. Dispositif selon l'une des revendications précédentes, **caractérisé en ce que** la diode du quadrant comprend un ou deux, de préférence trois, quatre ou plus, de quadrants (a, b, c, d) qui comportent de préférence des parties de surface identiques.

10. Dispositif selon l'une des revendications précédentes, **caractérisé en ce que** la source lumineuse (12) comprend un axe optique qui coïncide avec l'axe de rotation (D).

11. Dispositif selon l'une des revendications précédentes, **caractérisé en ce que** le premier élément de réception (e) fait partie d'un premier groupe de n éléments de réception (e), dans lequel en face de chacun des n éléments de réception (E), un élément de polarisation est disposé et les directions de polarisation des éléments de polarisation sont tordus les uns contre les autres, de préférence de 180 ° /n, où n est le nombre d'éléments de réception (e) du premier groupe avec n supérieur ou égal à 1, et le récepteur (20, 20-1, 20-2, 20-3, 20 -4) comprend de préférence au moins un autre groupe, de préférence trois autres groupes dont chacun est formé identique au premier groupe, et de préférence sont disposés symétriquement au récepteur (20, 20-1, 20-2, 20-3, 20-4).

12. Dispositif selon la revendication 11, **caractérisé en ce que** chaque fois deux éléments de réception (E) avec la même direction de polarisation sont disposés de point symétrique par rapport à un centre de symétrie (S) du récepteur (20, 20-1, 20 -2, 20-3, 20-4).

13. Dispositif selon la revendication 11 ou 12, **caractérisé en ce que** les éléments de réception (e) sont disposés sur au moins une, de préférence deux ou plus, de forme rectangulaire, de préférence quadrique ou circulaire pistes autour d'un centre de symétrie (S) du récepteur (20, 20-1 sont, 20-2, 20-3, 20-4).

14. Dispositif selon l'une des revendications précédentes, **caractérisé en ce que** l'élément de réception (e) ou les éléments de réception (e) font partie des quadrants (a, b, c, d) de la diode du quadrant, dans lequel de préférence dans chaque quadrant (a, b, c, d) au moins deux éléments de réception (e) sont disposés avec une direction de polarisation différente.

15. Dispositif selon l'une des revendications précédentes, **caractérisé en ce que** la source lumineuse (12), le récepteur (20, 20-1, 20-2, 20-3, 20-4) et un circuit d'évaluation sont formés en tant que circuit intégré.

16. Procédé servant à mesurer l'angle de rotation de deux objets tournant en rotation par rapport à l'autre autour d'un axe de rotation (D) avec un dispositif selon l'une des revendications précédentes, dans lequel l'intensité lumineuse mesurée par le récepteur (20, 20- 1, 20-2, 20-3, 20-4) est évaluée en tant que signal dépendant de l'angle de rotation, **caractérisé en ce que** les intensités lumineuses mesurées par les différents éléments de réception (e) et la diode du quadrant, sont évaluées en tant que signal dépendant de l'angle de rotation.
